# EUROPEAN PATENT SPECIFICATION

(11) **EP 0 422 866 B1**
(45) Date of publication and mention of the grant of the patent: **07.02.1996**
(21) Application number: 90310997.3
(22) Date of filing: 08.10.1990
(51) Int. Cl.: G06T 17/20

(54) **Method and apparatus for generating images**
Verfahren und Gerät zur Bilderzeugung
Méthode et appareil de génération d'images

(30) Priority: 13.10.1989 JP 265309/89
(43) Date of publication of application: 17.04.1991
(73) Proprietor: International Business Machines Corporation, Armonk, N.Y. 10504 (US)
(72) Inventor: Koyamada, Koji, Hadano-shi, Kanagawa-ken (JP)
(74) Representative: Burt, Roger James, Dr.

(56) References cited:
- US-A- 4 275 413
- IBM TECHNICAL DISCLOSURE BULLETIN. vol. 32, no. 1, June 1989, NEW YORK US pages 340 - 342; -: 'METHOD TO RECONSTRUCT SOLID ELEMENTS INTO LINEAR TETRAHEDRAL ELEMENTS'

## Description

The invention relates to a method for generating image data of an iso-valued surface, which is a set of points with a specified scalar value, when a scalar value is given to each of the points distributed in a 3D space beforehand by methods such as the three-dimensional finite element method (3D FEM).

"Volume Rendering" has recently been studied in the field of medical image processing, and some applications to the visualization of numerical simulation results have been reported. Though volume rendering is applicable to the three-dimensional finite difference method (3D FDM), it cannot be applied directly to the 3D FEM, which has no regular connections among neighboring grids points (elements), because it assumes that a scalar field is defined on an orthogonal grid. Details are given below.

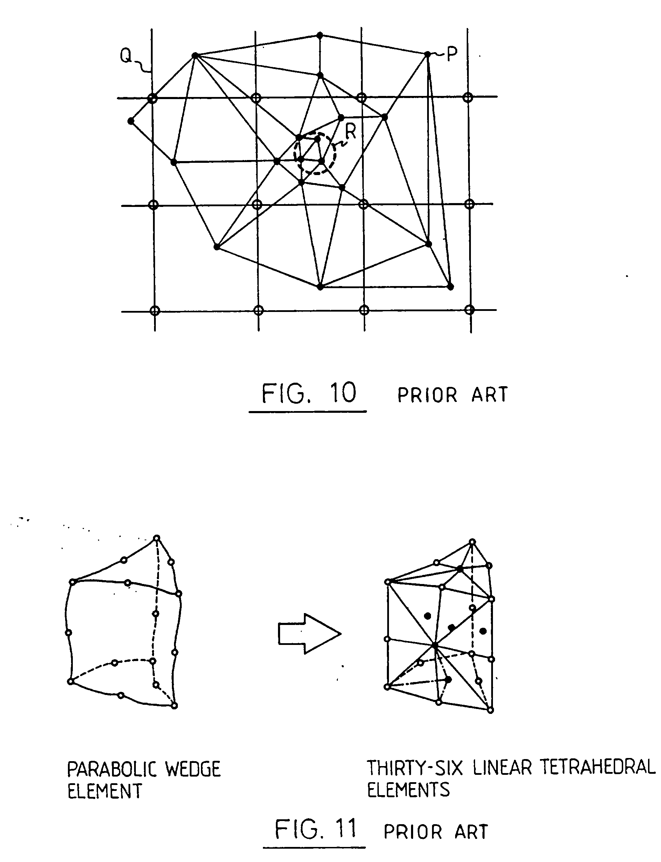

The FEM divides an area to be analysed into polyhedrons called elements, approximates the potential distribution in each element to a simple function, and obtains a scalar value at each node point. Generally, this method defines node points P irregularly, depending upon the nature of the area to be analyzed, as shown in Fig. 10.

When the volume rendering method is applied to the FEM output, scalar values defined on irregular grid points (node points) must be mapped to a regular grid Q (hexahedron). Information contained in the original 3D FEM analysis results may be lost, as in the case of the node points in region R of Fig. 10, unless the grid to which the 3D FEM results are mapped is positioned appropriately. Not a little information is lost in mapping, because the appropriateness depends heavily on the arrangement of the irregular grid of the FEM.

The method for extracting iso-valued surfaces without mapping node point information to a hexahedral grid is presented in the inventor's paper, "Visualization of Equi-Valued Surfaces and Stream Lines," I-DEAS/CAEDS International Conference Proceedings, Oct. 1988, pp. 87-97. This method is also disclosed in "Method for Reconstructing Solid Elements into Linear Tetrahedral Elements," IBM Technical Disclosure Bulletin 06-89, pp. 340-342. The method in these papers creates a node point and a scalar value for it at each of the face centres and the volume centre of each volume element, and then divides each volume element into linear tetrahedral elements defined by the node points. Fig. 11 shows the division of a parabolic wedge element into thirty-six linear tetrahedral elements.

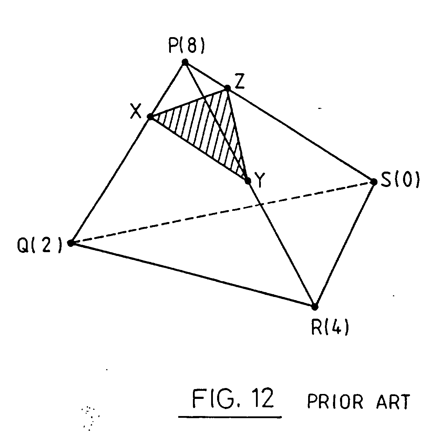

Fig. 12 shows one example of a created tetrahedral element. Assume that the scalar values of vertices P, Q, R, and S are 8, 2, 4, and 0, respectively. Visualization of the iso-valued surface with the scalar value 6 is considered below. Points X, Y, and Z, where the scalar value is 6, are searched by linear interpolation. The triangle defined by those three points X, Y, and Z is the approximation of the iso-valued surface within the tetrahedron PQRS.

The prior art method obtains geometric data of the iso-valued surface approximated by triangles, in other words, position data and connection data of the triangles, and performs shading on the basis of the data. However, the volume of the geometric data of the triangles is apt to be enormous. In particular, when multiple iso-valued surfaces are visualized as a semi-transparently shaded image, a large volume of storage is required, and it takes a lot of time to generate image data, because the geometric data of triangles have to be generated for each iso-valued surface.

Therefore, in accordance with a first aspect of the invention, there is provided a method for generating an image of an iso-valued surface in a 3-D space from position data and scalar values corresponding to a plurality of points distributed in the 3-D space and stored in a storage means of a computer system, the image generation being in response to an arbitrary scalar value being specified, the iso-valued surface being a set of points to which the arbitrary specified scalar value corresponds, the method comprising the steps of:
(a) dividing the 3-D space into tetrahedral elements by generating a list relating each tetrahedral element to its vertices and storing the list in the storage means, the vertices of the tetrahedral elements being ones of the plurality of points;
(b) generating, by referring to the list, a vector for each tetrahedral element, in accordance with the position data and the scalar values corresponding to the vertices of the tetrahedral element, the vector being representative of the normal vectors of iso-valued surfaces contained in the tetrahedral element;
(c) generating, for each vertex of each tetrahedral element, data of a normal vector associated with the vertex, from the vectors associated with the tetrahedral elements that comprise the vertex and storing the data in the storage means;
(d) generating, from the list and normal vector data associated with the vertices, image data of the iso-valued surface having the specified scalar value.

The invention therefore provides a method for generating image data of a shaded iso-valued surface directly, without using intermediate geometric data of triangles to represent the iso-valued surface.

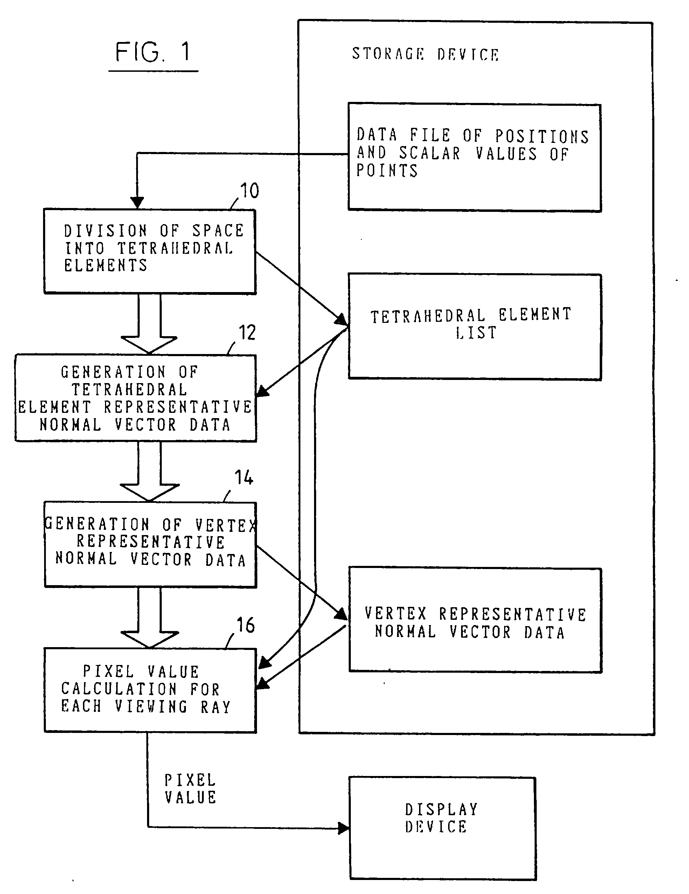

All iso-valued surfaces within a tetrahedron have the same normal vector, and scalar values change linearly along any segment, which is a very convenient property for direct shading. The invention utilizes this property of a tetrahedron. The steps of the method according to the invention are described with reference to Fig. 1.

Position data and scalar values are given to the points distributed in a 3D space, and stored in a storage device beforehand.
(a) First, the space is divided 10 into tetrahedral elements that have as vertices the points provided with scalar values, and a list that relates each tetrahedral element to its vertices is generated and stored in said storage device.
(b) The list is referred to and data of a vector (hereafter referred to as a tetrahedral element representative normal vector) that represents the normal vectors of iso-valued surfaces contained in each tetrahedral element are generated 12 according to the position data and the scalar values of the vertices of the tetrahedral element.
(c) For each vertex of a tetrahedral element, data of the normal vector associated with the vertex (hereafter referred to as the vertex representative normal vector) are generated 14 according to the tetrahedral element representative normal vectors of the tetrahedral elements that comprise the vertex. The generated data are stored in the storage device.
(d) Image data of the iso-valued surface with the specified scalar value are generated according to the list and the vertex representative normal vector data stored in said storage device by calculating pixel values 16 for each of the viewing rays.

In step (a), the space may be divided into tetrahedral elements only as defined by the points provided with scalar values beforehand. Alternatively, new node points may be added so that the space may be divided into tetrahedral elements as defined by the node points, including the new ones.

In a preferred form of the invention the image generation step (d) comprises the steps of:
(d(i)) determining whether a candidate tetrahedon contains points lying on the iso-valued surface;
(d(ii)) on determination that the candidate tetrahedron does contain points lying on the iso-valued surface, generating the position data of a point p, within the tetrahedron, lying on the iso-valued surface;
(d(iii)) determining the normal vector of the iso-valued surface at the point p by interpolating the normal vectors for the vertices of the tetrahedron;
(d(iv)) generating image data from the position data of the point p and the normal vector of the iso-valued surface at the point p.

Preferably step d(i) comprises the steps of selecting, for each of a plurality of viewing rays starting from a predetermined viewing point, a candidate tetrahedral element through which the viewing ray passes;
generating position data of two intersections of the viewing ray and the boundary of the candidate tetrahedral element;
determining the respective two scalar values corresponding to the positions of the two intersections in accordance with the position data and scalar values corresponding to the vertices of the candidate tetrahedral element and the position data of the two intersections;
determining whether the specified scalar value lies in the range defined by the respective two scalar values; and, on determination that the specified scalar value is in the range defined by the respective two scalar values, Step d(ii) comprises the steps of:
generating the position data of a point p in the candidate tetrahedron, lying on a line joining the two intersections and corresponding to the specified scalar value.

According to another aspect of the invention there is provided an image generator for generating, in response to an arbitrary scalar value being specified, an image of an iso-valued surface, all points on which have the arbitrary scalar value associated therewith, in a 3-D space from position data and scalar values corresponding to a plurality of points distributed in the 3-D space, the image generator comprising:
means for dividing the 3-D space into tetrahedral elements by generating a list relating each tetrahedral element to its vertices;
means for referring to the list for generating a vector for each tetrahedral element from the position data and the scalar values corresponding to the vertices of the tetrahedral element, the vector being representative of the normal vectors of iso-valued surfaces contained in the tetrahedral element;
means for generating, for each vertex of each tetrahedral element, data of a normal vector associated therewith from the vectors associated with the tetrahedral elements that comprise the vertex;
storage means for storing the position data and scalar values corresponding to the plurality of points, the list relating the tetrahedral elements to the vertices thereof, the vectors corresponding to the tetrahedral elements and normal vectors corresponding to the vertices;
means for generating, from the list and the normal vectors associated with the vertices, image data of the iso-valued surface.

Preferably the means for generating, from the list and the normal vectors associated with the vertices, the image data of the iso-valued surface comprises:
means for selecting a candidate tetrahedral element, through which a viewing ray, starting from a predetermined viewing point, passes;
means for generating position data of two intersection points of the viewing ray and the boundary of the candidate tetrahedral element;
means for determining the respective two scalar values corresponding to the positions of the two intersection points, from the position data and the scalar values corresponding to the vertices of the candidate tetrahedral element and the position data of the two intersection points;
means for determining whether the specified scalar value lies in the range defined by the respective two scalar values;
means for generating in response to determination that the specified scalar value lies in the range defined by the respective two scalar values, the position data of a point p in the candidate tetrahedron, lying on a line joining the two intersection points and corresponding to the specified scalar value;
means for interpolating the normal vector data for the vertices of the tetrahedron to determine data of a normal vector of the iso-valued surface at the point p;
means for generating image data associated with the viewing ray from the position data of the point p and the normal vector data of the iso-valued surface thereat.

The image generator can comprise a display device for displaying the image to a user and can form part of a data processing system, which may comprise other components such as a keyboard and/or a mouse, further storage devices, communications links and the like. The data processing system could, for example, take the form of a graphics workstation.

The invention will be further described by way of example with reference to an embodiment thereof and the following drawings:
Figure 1 is a flow chart schematically illustrating data processing in accordance with the invention;
Figure 2 is a perspective view of one example of a tetrahedron;
Figure 3 is a graph illustrating the change in scalar values in a tetrahedral element along a viewing ray;
Figure 4 is a perspective view of one example of a hexahedral element;
Figure 5 is a graph illustrating the change in scalar values in a hexahedral element along a viewing ray;
Figure 6 is an illustration of a tetrahedral element in a perspective coordinate system;
Figure 7 is an illustration of the data required for pixel value calculation;
Figure 8 is an illustration of a circumscribed rectangle of a tetrahedral element in a perspective coordinate system;
Figure 9 is an illustration of an assignment of colours to iso-valued surfaces;
Figure 10 is an illustration of prior art mapping of an FEM grid to an orthogonal grid;
Figure 11 is an illustration of the prior art division of a parabolic wedge element into thirty-six linear tetrahedral elements;
Figure 12 is an illustration of the prior art extraction of geometric data of an iso-valued surface from a tetrahedral element.

The invention will be explained with reference to an example in which the image data of an iso-valued surface are generated from 3D FEM analysis results.

### (A) Generation of tetrahedral element list

Tetrahedral model data, that is, (i) data of each vertex of a tetrahedron, (ii) a list of the IDs of vertices defining the tetrahedron, and (iii) the scalar value at each vertex of the tetrahedron, are generated from 3D FEM analysis results. Since the method for generating the model from the general 3D FEM results consisting of various finite elements without regular connection was explained simply with reference to Fig. 11 and a paper describing the details was referred to, no explanation is given here.

### (B) Generation of tetrahedral element representative vector data

It should be noted that the approximate equation that gives the distribution of scalar values within a tetrahedron is given in the form of a linear combination of X, Y, and Z. That is, the equation giving a scalar value SCAL within a tetrahedron is given uniquely as follows:${\text{SCAL = a}}_{\text{0}} {\text{+ a}}_{\text{x}} {\text{X + a}}_{\text{y}} {\text{Y + a}}_{\text{z}} \text{Z}$

This is because aₒ, aₓ, a_{y}, and a_{z} are determined uniquely by solving four simultaneous equations set up by substituting the position data of the four vertices of the tetrahedron, (X₁, Y₁, Z₁), (X₂, Y₂, Z₂), (X₃,Y₃, Z₃), (X₄,Y₄, Z₄) and their scalar values, SCAL1, SCAL2, SCAL3, and SCAL4, which are known beforehand, for equation (1). Such representation of the scalar values within the tetrahedron in the form of equation (1) makes it possible to think of the tetrahedron as a heap of iso-valued surfaces with a normal vector (aₓ, a_{y}, a_{z}). Therefore, the vector (aₓ a_{y}, a_{z}) can be regarded as a representative of the normal vectors of the iso-valued surfaces actually contained in the tetrahedron. In other words, (aₓ, a_{y}, a_{z}) is the tetrahedral element representative vector. For further details, see Appendix Section II-4 below.

### (C) Generation of vertex representative normal vector data

Next, vertex representative normal vector data are generated for each vertex of the tetrahedron. A vertex of a tetrahedron is generally shared with adjacent tetrahedral elements. Therefore, the simple average of normalized normal vector data of the tetrahedron that are defined by the vertex is regarded as the vertex representative normal vector data in this embodiment. If the vertex is on the edge of the 3D space and defines only one tetrahedral element, the representative normal vector of the tetrahedral element directly becomes the representative normal vector of the vertex. For further details, see Appendix Section II-5 below.

### (D) Pixel value calculation

A tetrahedron is searched for each of viewing rays starting from a given view-point, if
(1) the tetrahedron intersects the viewing ray, and
(2) the scalar value being visualized is equal to or smaller than the maximum of the scalar values at four vertices, and is equal to or greater than their minimum.

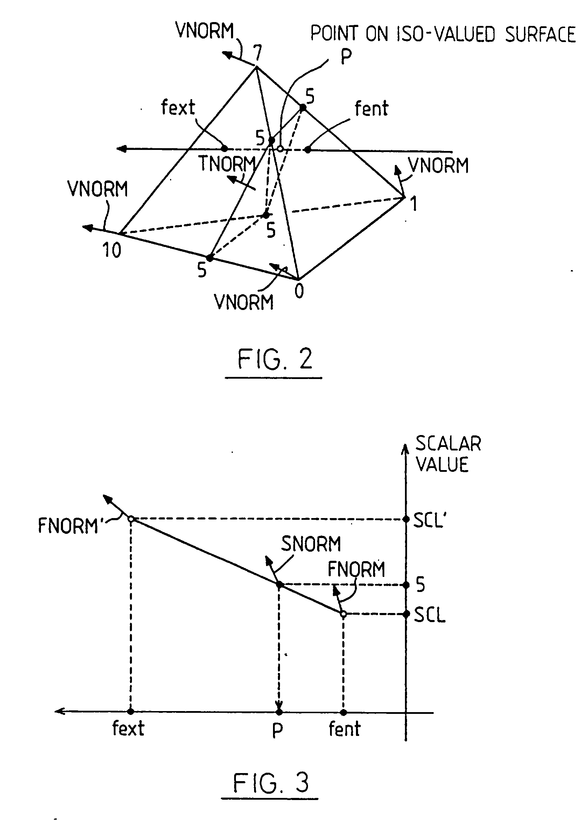

For each such tetrahedron found,
(3) the entry and exit points of the viewing ray to the tetrahedron, fent and fext, are obtained, and
(4) the normal vectors of the iso-valued surfaces at fent and fext, FNORM and FNORM', and their scalar values, SCL and SCL′, are obtained by interpolation using the values at the three vertices of the triangles including fent and fext. In Fig. 2, TNORM is the tetrahedral element representative normal vector and VNORM is the vertex representative normal vector.

Process (2) is carried out by referring to the tetrahedral element list and classifying the tetrahedral elements according to their relation to the scalar value to be visualized beforehand. For further details, please see Appendix Section II-3 below.

Moreover, for the tetrahedron that has the scalar value being visualized between the two scalar values calculated by the interpolation,
(5) the intersection P between the iso-valued surface and the viewing ray is obtained, and
(6) the normal vector of the iso-valued surface SNORM at the intersection is calculated by the interpolation.

Scalar values are distributed linearly on a segment piercing a tetrahedron, because scalar values are given by a linear expression of X, Y, and Z (formula 1) at points within it. Accordingly, evaluation of the scalar values at the entry and exit points of a ray to a tetrahedron, fent and fext, and comparison of the results with a scalar value C (five, for example), determine whether the iso-valued surface intersects the ray.

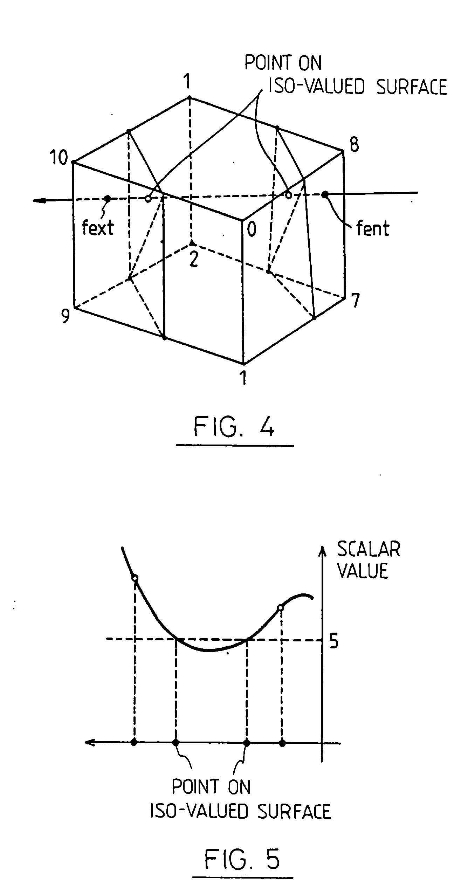

Here, division of the space into hexahedral elements (the hexahedral model) is considered with reference to Figs. 4 and 5. In order to obtain a point with a scalar value being visualized on a segment piercing a hexahedral element, a cubic equation has to be solved, because the distribution of scalar values on the segment is represented by a cubic function in a coordinate system with the segment as a coordinate axis. In other words, more than one iso-valued surface may be found on the segment. In addition, the calculation necessary to solve a cubic equation is very expensive in time and cost. On the other hand, if the space is divided into tetrahedral elements as in the present invention (the tetrahedral model), it can easily be judged whether the iso-valued surface intersects the viewing ray with only the scalar values at fent and fext. This is an advantage of the tetrahedral model over the hexahedral model.

For ease of understanding, an iso-valued surface with scalar value five that comprises two triangles is illustrated in Fig. 2. However, it should be noted that geometric data on the iso-valued surface (triangle data) are never generated in the present invention. Without such geometric data, normal vector data on the iso-valued surface at the intersection with the viewing ray are generated by using vertex representative normal vector data, which are given to each vertex. Because one vertex is typically shared by more than four tetrahedral elements, the volume of vertex representative normal vector data never becomes large relative to the number of tetrahedral elements. Further, vertex representative normal vector data are used in common for any iso-valued surfaces with any scalar values. Therefore, when multiple iso-valued surfaces are displayed semi-transparently, the prior art method generates a large volume of triangle data for each of the iso-valued surfaces, while the present invention utilizes vertex representative normal vector data repeatedly, which results in a much smaller volume of data being required for image generation.

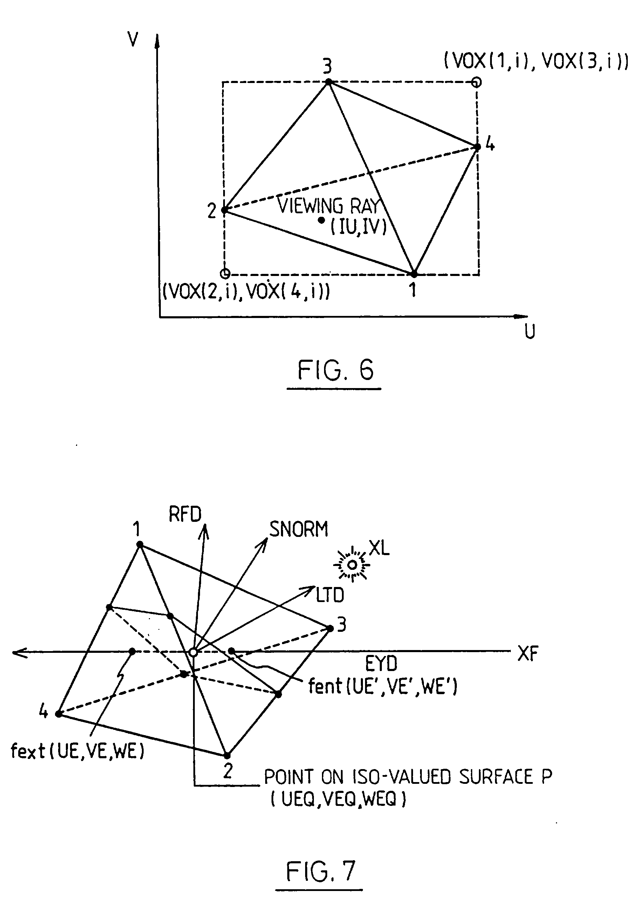

Pixel value calculation is performed according to the position data of the intersection between the viewing ray and the iso-valued surface and the normal vector data of the iso-valued surface at the intersection. Such calculation is done in accordance with a known method such as Phong's model. For further details, see the description relating to Fig. 7 and see Appendix Section II-7 below.

In accordance with the invention, different viewing rays have intersections at different positions on the same iso-valued surface in the same tetrahedral element, so that the interpolated normal vector data are also different. Therefore, the edges of triangles displayed on the screen are not highlighted relative to the enclosed areas. It is of course possible to modify the calculated pixel values in order to smooth the displayed image.

The essential part of data flow in accordance with the invention is mentioned above. Process (1) is performed in a perspective coordinate system and processes (3) to (6) are performed in an eye coordinate system. The processes in each coordinate system are described below in detail.

### (E) Process in a perspective coordinate system

In this kind of coordinate system, a viewing ray is mapped to coordinates (IU, IV), as shown in Fig. 6. A search is made to determine which tetrahedron intersects the viewing ray. In the example of Fig. 6, the viewing ray enters triangle 1-2-3 and exits triangle 4-1-2. Z values (IW, IW') are interpolated on each of the triangles intersected by the viewing ray.

Subroutine TRJUDG (TRPT, IU, IV, IFLUG, S, T) is used to determine whether or not viewing ray (IU, IV) intersects triangle ((TRPT (i,j), i=1,2), j=1,3) (see attached material). In this subroutine, IU and IV are represented as follows:$\text{IU = S.TRPT(1,1) + T.TRPT(1,2)} \text{+ (1-S-T).TRPT(1,3)}$$\text{IV = S.TRPT(2,1) + T.TRPT(2,2)} \text{+ (1-S-T).TRPT(2,3)}$

If 0≤S≤1, 0≤T≤1, and 0≤S+T≤1, point (IU, IV) is judged to be inside or on the edge of the triangle and IFLUG=1 is returned. IFLUG is used to determine whether the viewing ray is inside or outside the triangle. IW and IW' are interpolated according to (S,T).

### (F) Process in eye coordinate system

Next, the position data of fent and fext, namely (UE, VE, WE) and (UE', VE', WE'), are obtained by transforming the two points (IU, IV, IW), (IU, IV, IW') into the eye coordinate system (see Fig. 7).

S and T, mentioned above, cannot be used for the interpolation of scalar values and normal vector at fent and fext, because a perspective transformation does not preserve the segment ratio. Therefore, (S, T) in the eye coordinate system is obtained by applying TRJUDG again to UE, VE) and (UE', VE'). Scalar values and normal vector at fent and fext, ((SCL, SCL'), (FNORM, FNORM')), are interpolated according to this (S, T). Calculation of coordinates and normal vector at a point on an iso-valued surface according to these data takes advantage of the fact that scalar values and normal vectors change linearly along any segment within a tetrahedron. That is, a point (X_{C}, Y_{C}, Z_{C}) on the segment that links point A, (X_{A}, Y_{A}, Z_{A}), and point B, (X_{B}, Y_{B}, Z_{B}), is represented as follows:

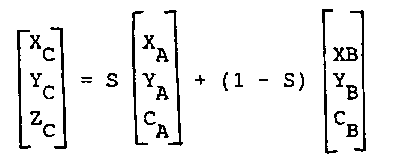

Scalar value distribution in a tetrahedron is represented by${\text{f= a}}_{\text{0}} {\text{+ a}}_{\text{x}} {\text{X + a}}_{\text{y}} {\text{Y + a}}_{\text{z}} \text{Z}$

Accordingly, scalar value distribution along the segment AB is represented as follows:${\text{f = a}}_{\text{0}} {\text{+ a}}_{\text{x}} {\text{X}}_{\text{c}} {\text{+ a}}_{\text{y}} {\text{Y}}_{\text{c}} {\text{+ a}}_{\text{z}} {\text{Z}}_{\text{c}} {\text{= a}}_{\text{0}} {\text{+ a}}_{\text{x}} {\text{{SX}}_{\text{A}} {\text{+ (1-S)X}}_{\text{B}} \text{}} {\text{+ a}}_{\text{y}} {\text{{sY}}_{\text{A}} {\text{+ (1-S)Y}}_{\text{B}} \text{}} {\text{+ a}}_{\text{z}} {\text{{SZ}}_{\text{A}} {\text{+ (1-S)Z}}_{\text{B}} \text{}} {\text{= S {a}}_{\text{0}} {\text{+ a}}_{\text{x}} {\text{X}}_{\text{A}} {\text{+ a}}_{\text{y}} {\text{Y}}_{\text{A}} {\text{+ a}}_{\text{z}} {\text{Z}}_{\text{A}} \text{}} {\text{+ (1-S) {a}}_{\text{0}} {\text{+ a}}_{\text{x}} {\text{X}}_{\text{B}} {\text{+ a}}_{\text{y}} {\text{Y}}_{\text{B}} {\text{+ a}}_{\text{z}} {\text{Z}}_{\text{B}} \text{}} {\text{= Sf}}_{\text{A}} {\text{+ (1-S)f}}_{\text{B}}$

This is linear distribution.

Assuming that the scalar value being visualized is C, the weight coefficients for linear interpolation p, q (p+q=1) are as follows:$\text{p = (C - SCL')/(SCL - SCL')}$$\text{q = (SCL' - C)/(SCL - SCL')}$

The coordinate values (UEQ, VEQ, WEQ) and normal vector (SNORM(j)(j=1,3)) are as follows:$\text{UEQ = p.UE + q.UE'}$$\text{VEQ = p.VE + q.VE'}$$\text{WEQ = p.WE + q.WE'}$$\text{SNORM(1) = p.FNORM(1) + q.FNORM'(1)}$$\text{SNORM(2) = p.FNORM(2) + q.FNORM'(2)}$$\text{SNORM(3) = p.FNORM(3) + q.FNORM'(3)}$

The light direction vector (LTD(j)(j=1,3)) is obtained from (UEQ, VEQ, WEQ) and the position data of the light source point XL, and the cosine DOTDF of the angle between the light and the normal, which is required to calculate the diffuse reflection, is calculated. Further, the reflected light direction vector (RFD(j)(j=1,3)) is obtained from the light direction vector, DOTDF, and the normal vector, and the cosine DOTRF of the angle between the viewing ray and the normal, which is required to calculate the specular reflection, is calculated. Pixel values ((IPIXEL(i,j), i=1,3, j=1,1024) are obtained from the two calculated cosines.

One use of the invention, for generating image data on iso-valued surfaces, is described above. Needless to say, various other examples are conceivable. For example, in the above embodiment, the vertex representative normal vector is calculated by obtaining a simple average of the representative normal vectors of the tetrahedrons sharing the vertex. In another embodiment, however, it can be calculated by obtaining the average of the representative normal vectors weighted by the solid angles of the tetrahedrons. The weighting factor can be the distance between the vertex and the gravity centre of the tetrahedron sharing it in still another embodiment.

Further, the space is virtually divided into tetrahedral elements as defined by the node points that are generated and distributed irregularly by 3D FEM and those that are added later in the above embodiment. However, the invention can be applied to the case where scalar values are provided with the points on the structured grid. Koide et al., in "Tetrahedral Grid Method for Equi-valued Surface Generation," Proceedings of the 35th annual convention of Information Processing Society of Japan, 13G-10 (1987), disclose a method for the division of such a structured grid space into tetrahedral elements. In this case, grid point addition, which is equivalent to node point addition in the above embodiment, is never performed. The process after the division of the structured grid space into tetrahedral elements is the same as in the above embodiment.

There has been described for a plurality of points being distributed in a 3D space, and position data and scalar values being given to the points and stored in a storage device beforehand, a method, in response to an arbitrary scalar value being specified, for generating an iso-valued surface, which is a set of points with the specified scalar value, in said space, comprising the steps of:
(a) virtually dividing said space into tetrahedral elements that have as vertices the points provided with scalar values, generating a list that relates each tetrahedral element to its vertices, and storing it in said storage device,
(b) referring to said list and generating, for each tetrahedral element, data of a vector (hereafter referred to as a tetrahedral element representative normal vector) that represents the normal vectors of iso-valued surfaces contained in the tetrahedral element, according to the position data and the scalar values of the vertices of the tetrahedral element,
(c) generating, for each vertex of a tetrahedral element, data of the normal vector associated with the vertex (hereafter referred to as the vertex representative normal vector) according to the tetrahedral element representative normal vectors of the tetrahedral elements that comprise the vertex, and storing the data in the storage device, and
(d) generating image data of the iso-valued surface with the specified scalar value according to the list and the vertex representative normal vector data stored in said storage device.

The said points provided with scalar values beforehand can be node points for a 3D finite element method, and
in said step (a), new node points can be added and position data and scalar values for them generated, after which the 3D space is divided virtually into tetrahedral elements as defined by the node points.

The image generation step (c) can comprise the steps of:
(d) for each of the viewing rays starting from a predetermined view-point, selecting a tetrahedral element that is passed by the viewing ray and that possibly contains an iso-valued surface with the specified scalar value, by referring to said list,
(e) generating the position data of two intersections between the selected tetrahedron and the viewing ray,
(f) interpolating scalar values at said intersections according to their position data, the position data of the vertices defining said selected tetrahedron, and the scalar values at the vertices,
(g) judging whether the specified scalar value is included in the interval defined by said interpolated scalar values,
(h) if the result of said step (g) is affirmative, generating on a segment that links said intersections, the position data of a point p that has the specified scalar value,
(i) interpolating at the point p, data of a normal vector n of the iso-valued surface,
(j) generating image data associated with the viewing ray based on said position data of p and said data of the normal vector n, and
(k) inputting the generated image data into a display device.

The invention further provides,for a plurality of points being distributed in a 3D space, and position data and scalar values being given to the points and stored in a storage device beforehand, apparatus, in response to an arbitrary scalar value being specified, for generating an iso-valued surface, which is a set of points with the specified scalar value, in said space, comprising:
(a) means for virtually dividing said space into tetrahedral elements that have as vertices the points provided with scalar values, generating a list that relates each tetrahedral element to its vertices, and storing it in said storage device,
(b) means for referring to said list and generating, for each tetrahedral element, data of a vector (hereafter referred to as a tetrahedral element representative normal vector) that represent the normal vectors of iso-valued surfaces contained in the tetrahedral element, according to the position data and the scalar values of the vertices of the tetrahedral element,
(c) means for generating, for each vertex of a tetrahedral element, data of the normal vector associated with the vertex (hereafter referred to as the vertex representative normal vector) according to the tetrahedral element representative normal vectors of the tetrahedral elements that comprise the vertex, and storing the data into the storage device, and
(d) means for generating image data of the iso-valued surface with the specified scalar value according to the list and the vertex representative normal vector data stored in said storage device.

In accordance with the invention, image data of an iso-valued surface formed by a set of points with the same scalar value are generated at high speed and without the need for much memory when scalar values are provided beforehand with points distributed in 3D space.

### APPENDIX

### I. Data given at the time of division into tetrahedrons

Vertex Coordinates pointw(j,i)
(j=1,3, i=1,Npoint)
Vertex List iconnect(j,i)
(For each tetrahedron) (j=1,4, i=1,Ntetra (i denotes ID of a tetrahedron. This is a tetrahedral element list.))
Scalar Value SCAL(i) (i=1,Npoint)
(For each vertex)
Scalar Value to be visualized
CRT(i) (i=1,NCRT) (ascending order)
View-point, reference point, light source
XF(i), XA(i), XL(i) (i=1,3)

Here, Npoint denotes the total number of vertices, Ntetra denotes the total number of tetrahedrons, and NCRT denotes the total number of iso-valued surfaces.

### II. Processes

In this section pseudocode representations are shown of the logical processes used in the embodiment of the invention.

### 1. Transformation of vertex coordinates into an eye coordinate system and into a perspective coordinate system

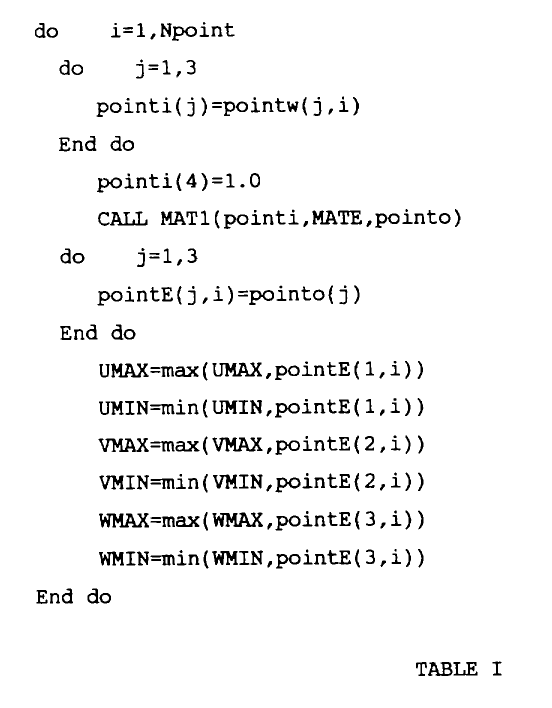

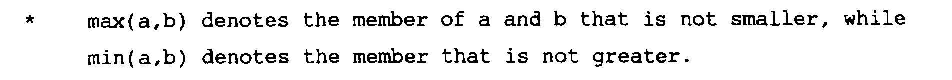

In Table I, MAT1 is a subroutine that multiplies (pointi(i), i = 1,4), a point represented by a homogeneous coordinate system, by transformation matrix MATE(4,4) and returns the result to (pointo(i), i = 1,4). MATE(4,4) is an eye transformation matrix determined on the basis of XA(3) and XF(3).

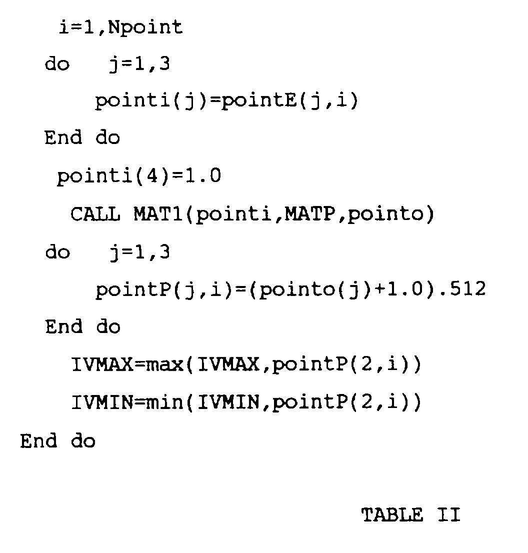

In Table II, MATP(4,4) is a perspective transformation matrix determined on the basis of K (half of the screen size) and H (the distance between the eye and the plane of projection). Default values are determined as follows:$\text{K =} \frac{\text{1}}{\text{2}} \text{x max(|UMAX|, |UMIN|, |VMAX|, |VMIN|)}$$\text{H =} \frac{\text{1}}{\text{2}} \text{x WMIN}$

An eye transformation and a perspective transformation are also performed for eye point XA(3) and the results are stored in XAE(3) and XAP(3), respectively.

### 2. Setting of a circumscribed rectangle (a perspective coordinate system) for each tetrahedron

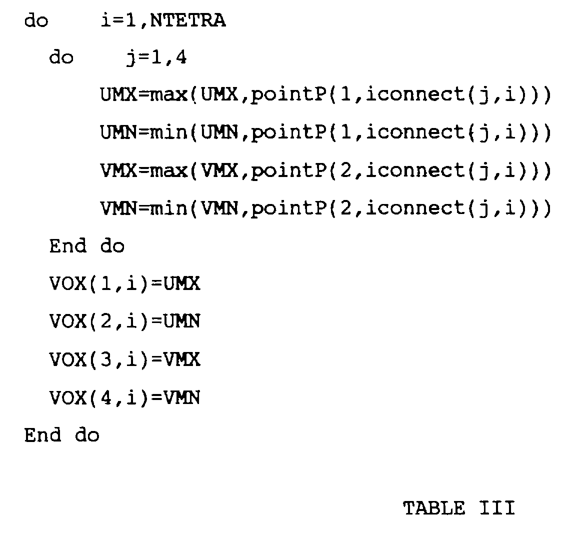

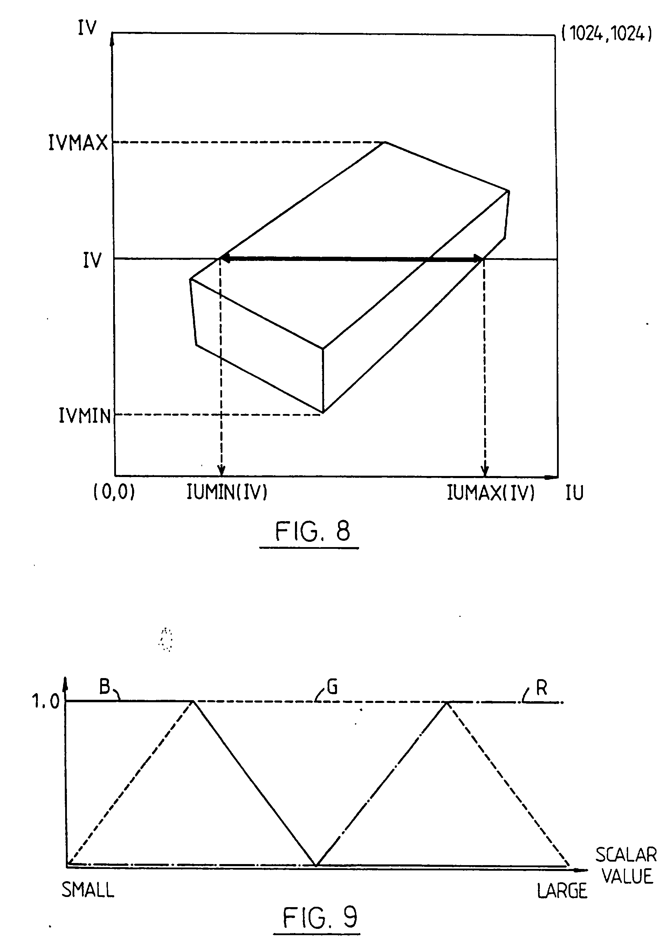

In Table III, the perspective coordinates of (IU, IV) are normalized to a screen size of 1024 x 1024 during step 1 (See Fig. 8). Therefore, the area subject to pixel value calculation is known for the IV component on the basis of IVMAX and IVMIN. Next, the areas subject to pixel value calculation, IUMAX(IV) and IUMIN(IV), are found for each IV by using the obtained VOX(4, NTETRA) (See Fig. 6). This is shown in Table IV.

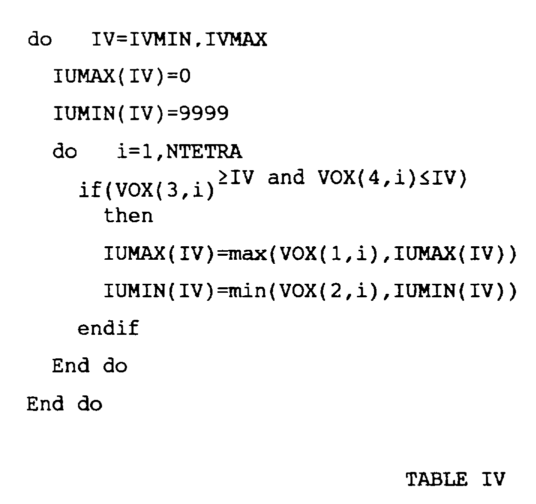

### 3. Classification of tetrahedrons based on scalar values at vertices

Tetrahedrons are classified according to which of the scalar values to be visualized (CRT(i)) they contain. A binary number of ICRT digits is given. A rule is adopted that the i-th digit is set to 1 if the scalar value CRT(i) is contained in the tetrahedron. The resultant number is stored into the array ICLASS(NTETRA). This is shown in Table V.

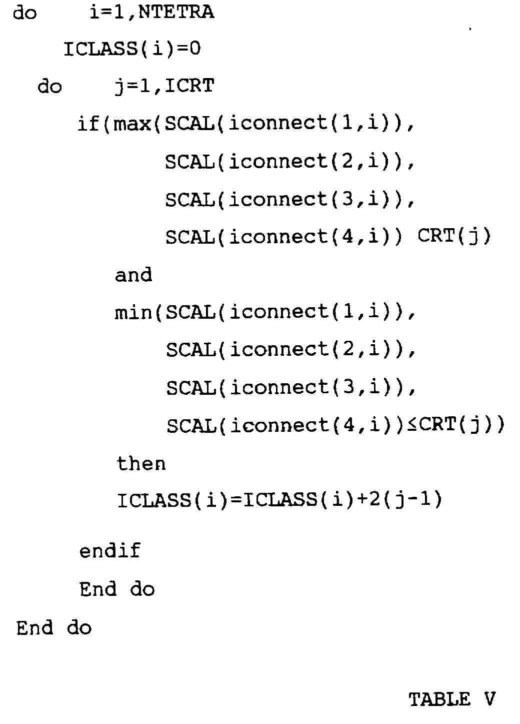

### 4. Normal vector calculation for each tetrahedron

Assume that the scalar value distribution is described as shown in the following equation:${\text{SCAL = a}}_{\text{0}} {\text{+ a}}_{\text{x}} {\text{X + a}}_{\text{y}} {\text{Y + a}}_{\text{z}} \text{Z}$

The normal vector TNORM of iso-valued surfaces in the tetrahedron can then be calculated as follows:
TNORM(1,i) aₓ
TNORM(2,i) = grad(SCAL) = a_{y}
TNORM(3,i) Z_{z}

The following equations are satisfied at the four vertices of the tetrahedron.${\text{SCAL1 = a}}_{\text{0}} {\text{+ a}}_{\text{x}} {\text{X}}_{\text{1}} {\text{+ a}}_{\text{y}} {\text{Y}}_{\text{1}} {\text{+ a}}_{\text{z}} {\text{Z}}_{\text{1}}$${\text{SCAL2 = a}}_{\text{0}} {\text{+ a}}_{\text{x}} {\text{X}}_{\text{2}} {\text{+ a}}_{\text{y}} {\text{Y}}_{\text{2}} {\text{+ a}}_{\text{z}} {\text{Z}}_{\text{2}}$${\text{SCAL3 = a}}_{\text{0}} {\text{+ a}}_{\text{x}} {\text{X}}_{\text{3}} {\text{+ a}}_{\text{y}} {\text{Y}}_{\text{3}} {\text{+ a}}_{\text{z}} {\text{Z}}_{\text{3}}$${\text{SCAL4 = a}}_{\text{0}} {\text{+ a}}_{\text{x}} {\text{X}}_{\text{4}} {\text{+ a}}_{\text{y}} {\text{Y}}_{\text{4}} {\text{+ a}}_{\text{z}} {\text{Z}}_{\text{4}}$

The following equations are obtained by calculating (1)-(4), (2)-(4), and (3)-(4) to eliminate a₀.

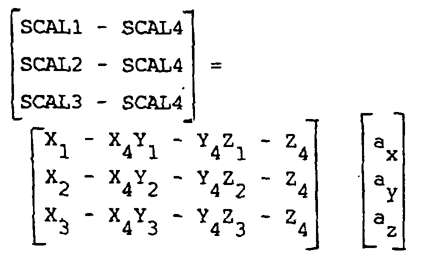

TNORM is obtained by solving the above equations for (aₓ, a_{y}, a_{z}).

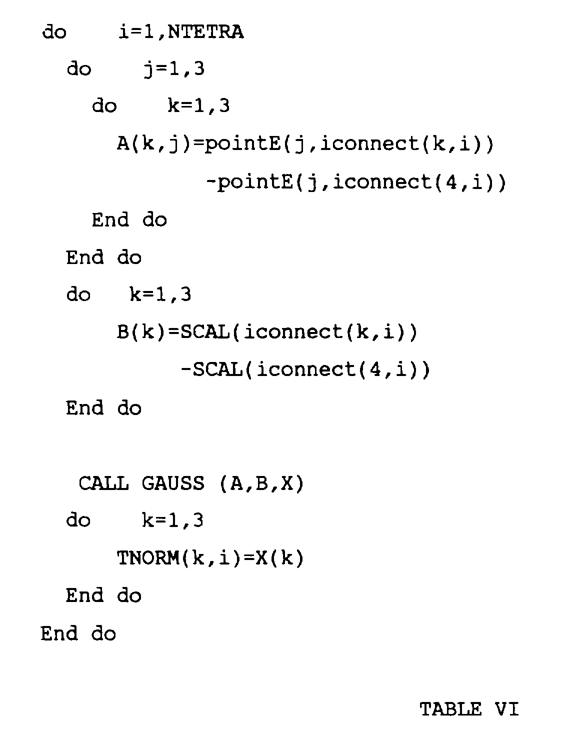

In Table VI, GAUSS(A, B, X) is a subroutine for solving simultaneous equations with three unknowns by the Gauss elimination method. A is a coefficient matrix, B is a right-hand side vector and X is a solution vector.

### 5. Normal vector calculation at each vertex

VNORM(j,i)(j=1,3, i=Npoint) is obtained for each vertex on the basis of TNORM(j,i)(j=1,3, i=Ntetra), which is calculated for each tetrahedron. For each vertex, the assigned TNORM(j,i) is added and the sum is divided by the number of tetrahedrons connected to the vertex. This is shown in Table VII

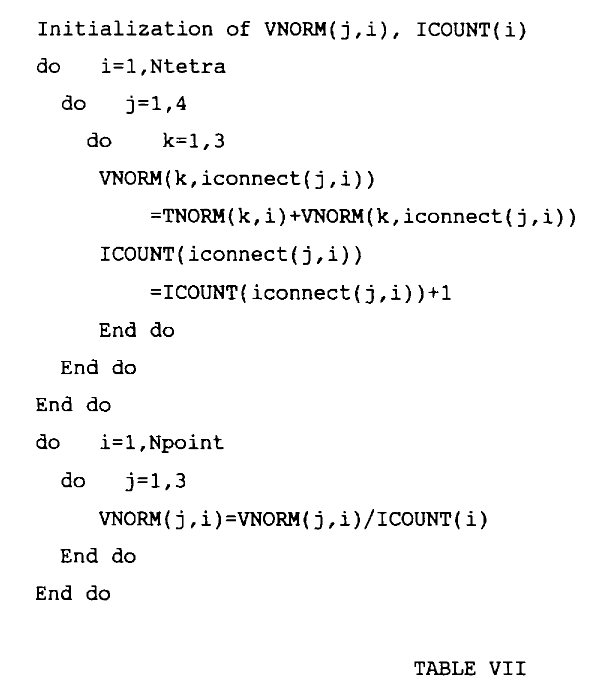

### 6. The Assignment of color to iso-valued surface is shown in Table VIII

The ratio of R (red), G (green), and B (blue) is predetermined according to the scalar value, as shown in Fig. 9.

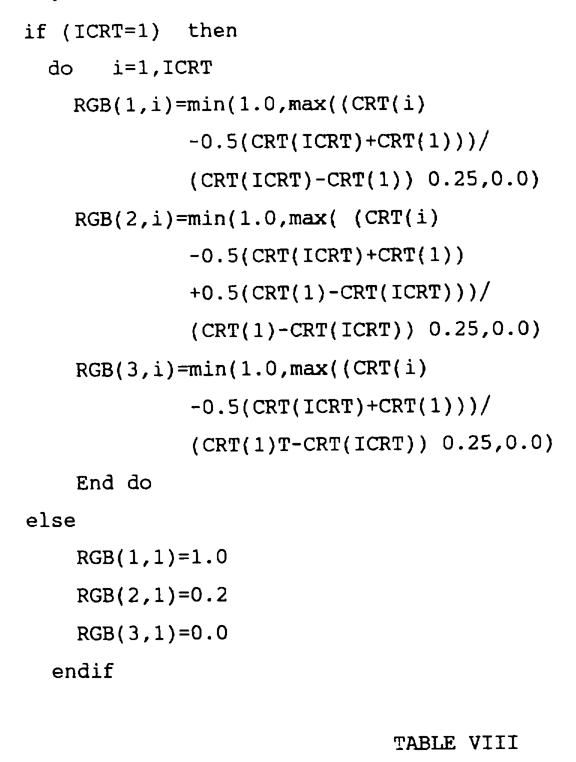

### 7. Pixel value calculation

Each time the calculation of pixel values (PIXEL(1024,3)) is completed for one scan line (with constant IV), the results are written into an external file. All pixels have the value 0 in the upper background area (IV=IVMAX+1,1024). This is shown in Table IV

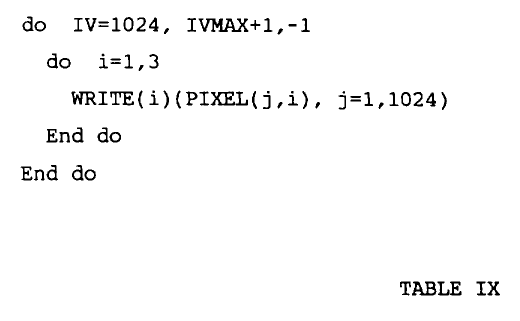

For each pixel (IU, IV) in the pixel value calculation area (IV=IVMIN, IVMAX), a tetrahedron that contains it is searched. The scalar values SCL(2) at the entry and exit points to the tetrahedron of the ray that corresponds to the pixel, fent and fext, are then obtained and compared with the scalar value to be visualized, CRT(ICRT), to determine whether an iso-valued surface with that scalar value exists. If the iso-valued surface exists, the pixel value is calculated by using Phong's model and the result is stored into array (PIC(i,j), i=1,100, j=1,4) together with the Z value of the iso-valued surface. When every tetrahedron has been stored, the array is sorted by using PIC(i,4)(i=1,100) in descending order as keys.

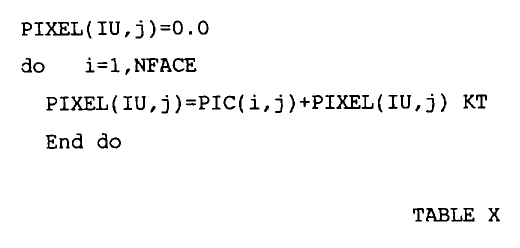

In Table X, KT is the transparency of the iso-valued surface and NFACE is the number of iso-valued surfaces. The information on all the iso-valued surfaces intersected by one viewing ray influences the pixel value calculation for the ray in such imaging of multiple semi-transparent iso-valued surfaces.

When this work is completed for one scan line, the results are written into the external file. The details are given in Table XI below, where comments are marked.

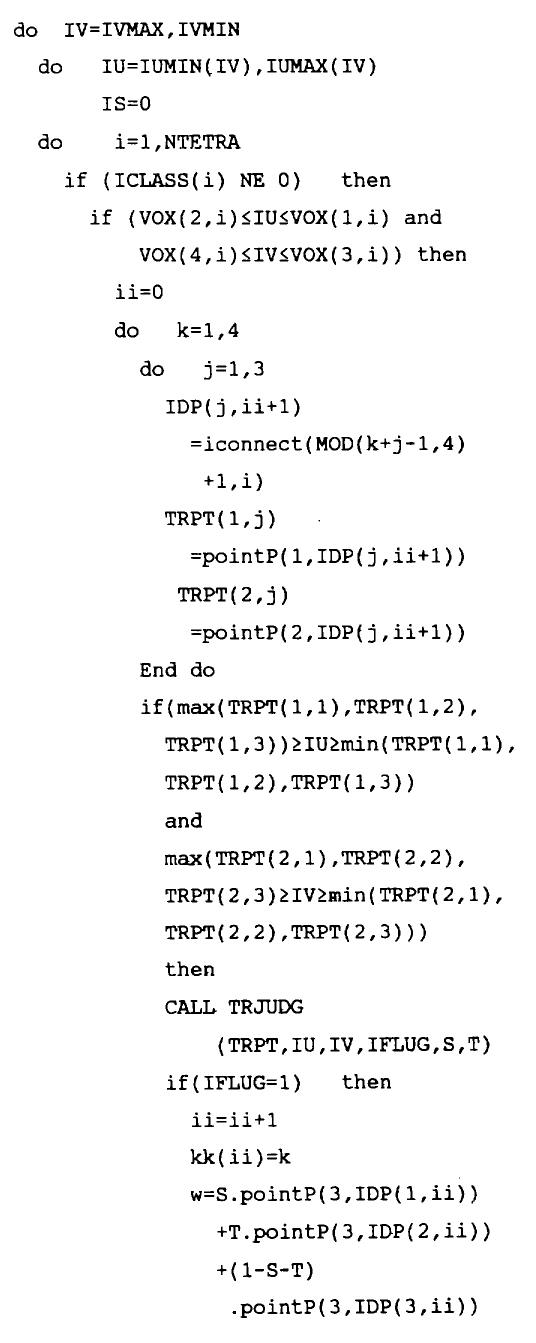

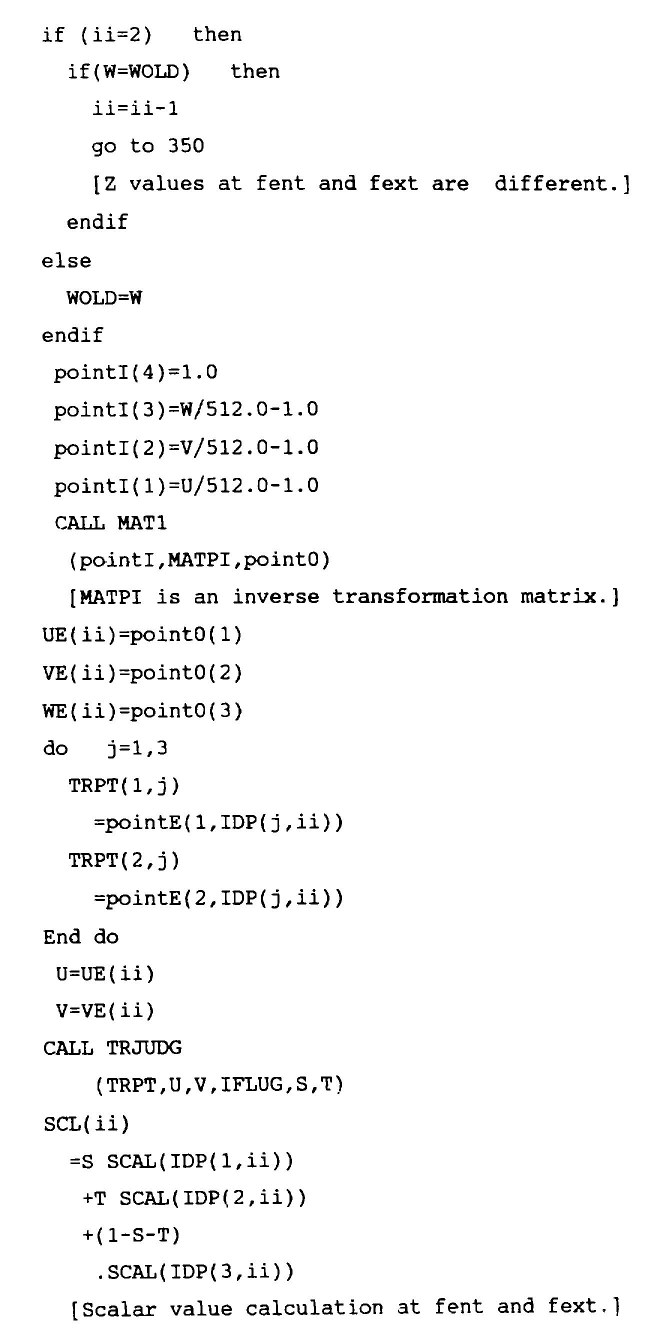

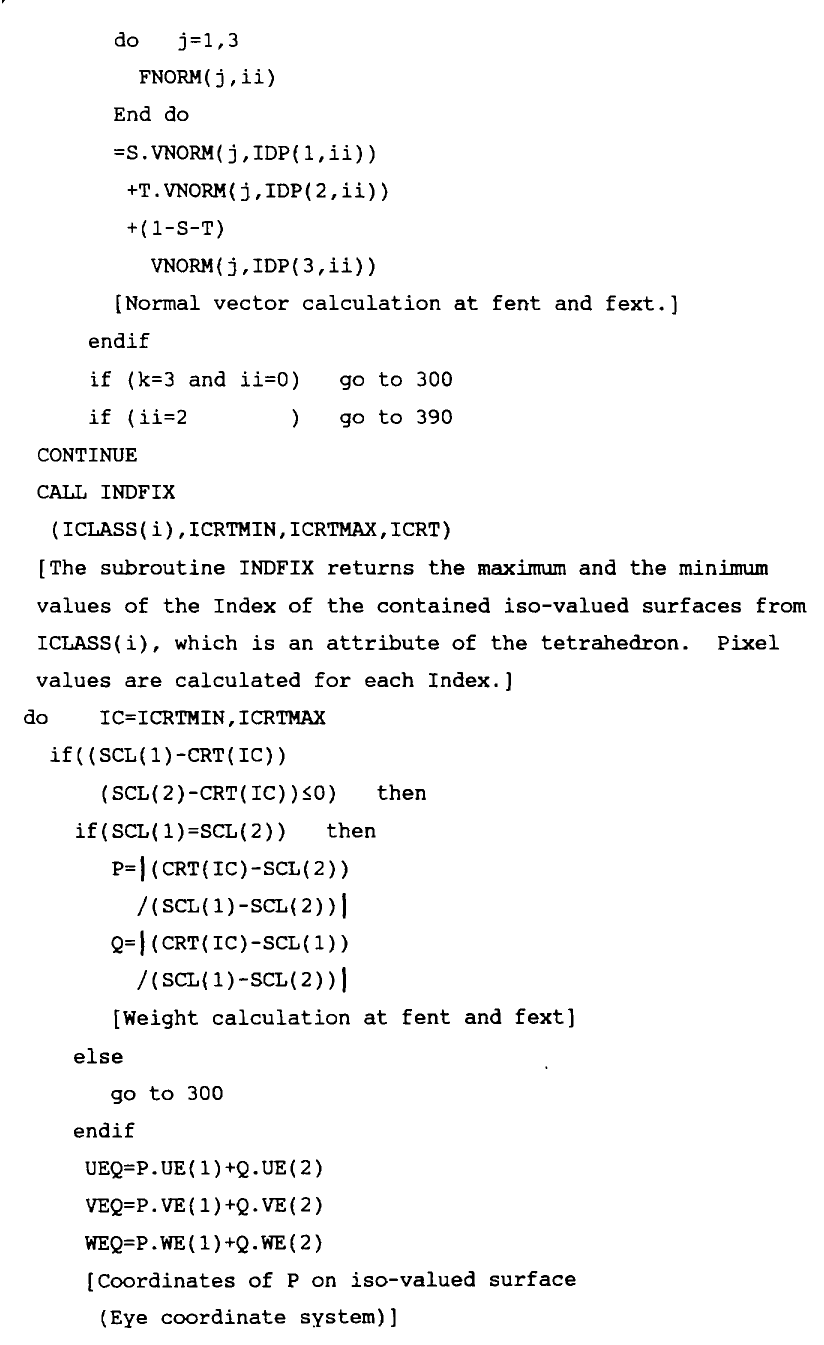

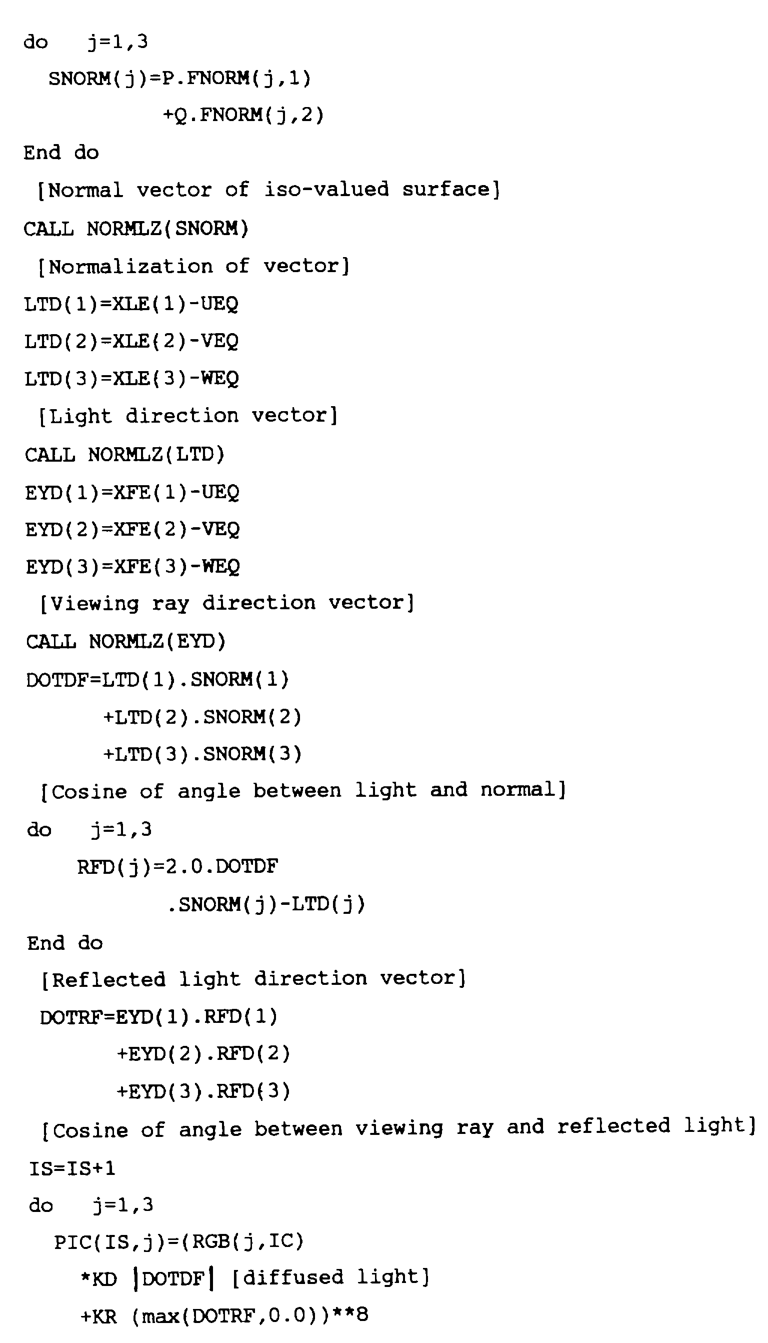

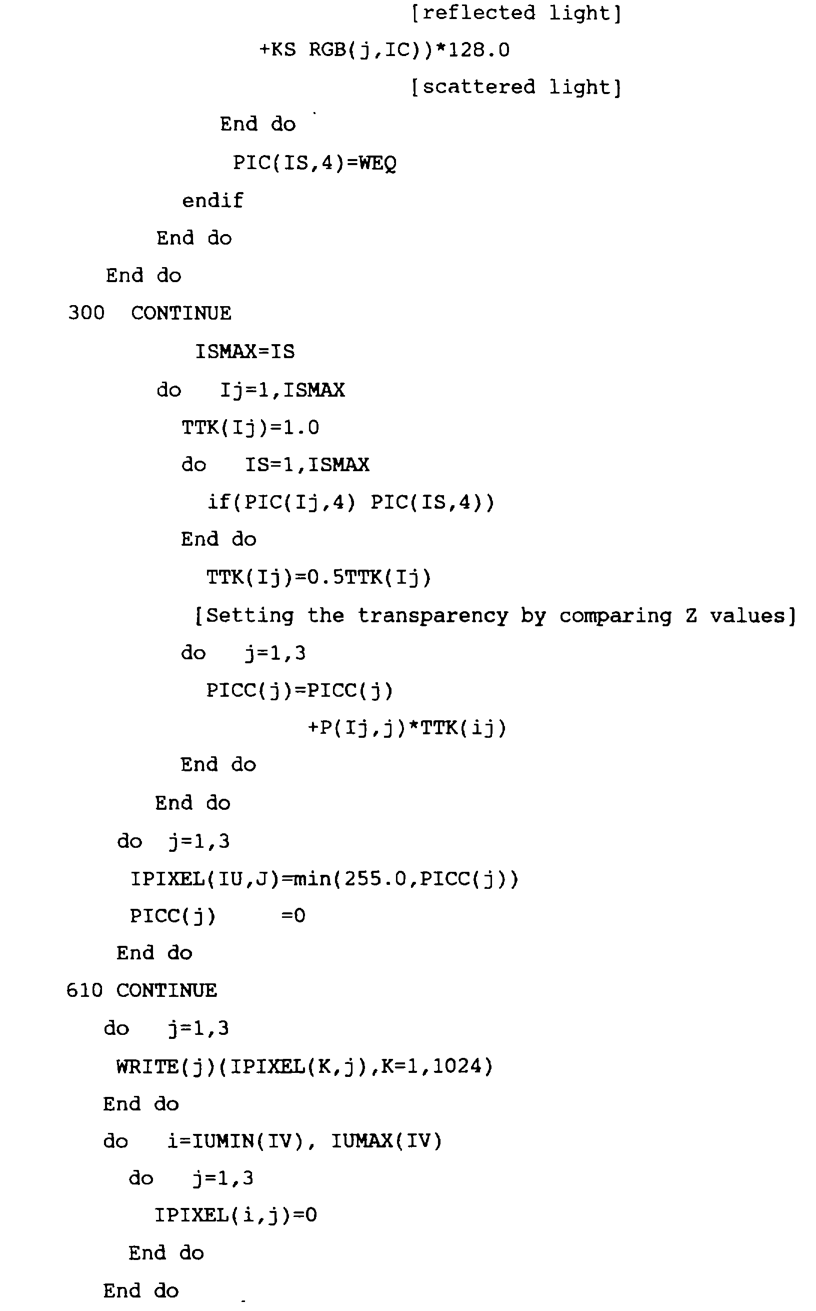

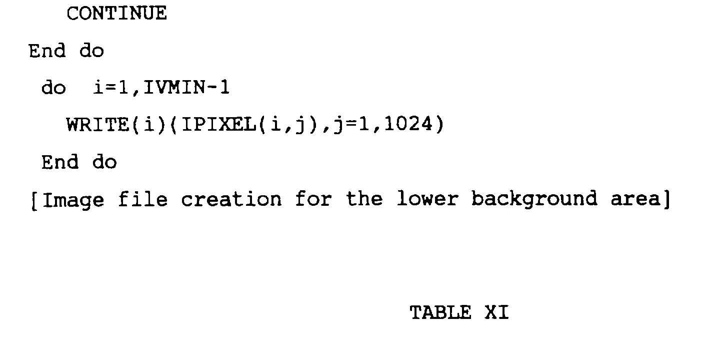

### III. output data

An image file for RGB (3 x 1024 x 1024 pixels, eight bits per pixel) is created.

## Claims

1. A method for generating an image of an iso-valued surface in a 3-D space from position data and scalar values corresponding to a plurality of points distributed in the 3-D space and stored in a storage means of a computer system, the image generation being in response to an arbitrary scalar value being specified, the iso-valued surface being a set of points to which the arbitrary specified scalar value corresponds, the method comprising the steps of:
(a) dividing the 3-D space into tetrahedral elements by generating a list relating each tetrahedral element to its vertices and storing the list in the storage means, the vertices of the tetrahedral elements being ones of the plurality of points;
(b) generating by referring to the list a vector for each tetrahedral element, in accordance with the position data and the scalar values corresponding to the vertices of the tetrahedral element, the vector being representative of the normal vectors of iso-valued surfaces contained in the tetrahedral element;
(c) generating, for each vertex of each tetrahedral element, a normal vector associated with the vertex, from the vectors associated with the tetrahedral elements that comprise the vertex and storing the data in the storage means;
(d) generating, from the list and normal vector data associated with the vertices, image data of the iso-valued surface having the specified scalar value.

2. Method as claimed in claim 1 wherein the step (d) of generating image data comprises the steps of:
(d(i)) determining whether a candidate tetrahedon contains points lying on the iso-valued surface;
(d(ii)) on determination that the candidate tetrahedron does contain points lying on the iso-valued surface, generating the position data of a point p, within the tetrahedron, lying on the iso-valued surface;
(d(iii)) determining the normal vector of the iso-valued surface at the point p by interpolating the normal vectors for the vertices of the candidate tetrahedron;
(d(iv)) generating image data from the position data of the point p and the normal vector of the iso-valued surface at the point p.

3. Method as claimed in Claim 2 wherein the step (d(i)) comprises the steps of:
selecting, for each of a plurality of viewing rays starting from a predetermined viewing point, a candidate tetrahedral element through which the viewing ray passes;
generating position data of two intersections of the viewing ray and the boundary of the candidate tetrahedral element;
determining the respective two scalar values corresponding to the positions of the two intersections in accordance with the position data and scalar values corresponding to the vertices of the candidate tetrahedral element and the position data of the two intersections;
determining whether the specified scalar value lies in the range defined by the respective two scalar values;
and wherein, on determination that the specified scalar value is in the range defined by the respective two scalar values, the step d(ii), comprises
generating the position data of a point p in the candidate tetrahedron, lying on a line joining the two intersections and corresponding to the specified scalar value

4. Method as claimed in any of claims 1 to 3 wherein the plurality of points are node points for a 3-D finite element method.

5. Method as claimed in claim 4 comprising the step, prior to the step (a), of adding new node points and generating position data and scalar values corresponding thereto.

6. Method as claimed in any preceding claim comprising the step of displaying the generated image on a display device

7. Image generator for generating, in response to an arbitrary scalar value being specified, an image of an iso-valued surface, all points on which have the arbitrary scalar value associated therewith, in a 3-D space from position data and scalar values corresponding to a plurality of points distributed in the 3-D space, the image generator comprising:
means for dividing the 3-D space into tetrahedral elements by generating a list relating each tetrahedral element to its vertices the vertices of the tetrahedral elements being ones of the plurality of points;
means for referring to the list for generating a vector for each tetrahedral element from the position data and the scalar values corresponding to the vertices of the tetrahedral element, the vector being representative of the normal vectors of iso-valued surfaces contained in the tetrahedral element;
means for generating, for each vertex of each tetrahedral element, data of a normal vector associated therewith from the vectors associated with the tetrahedral elements that comprise the vertex;
storage means for storing the position data and scalar values corresponding to the plurality of points, the list relating the tetrahedral elements to the vertices thereof, the vectors corresponding to the tetrahedral elements and normal vectors corresponding to the vertices;
means for generating, from the list and the normal vectors associated with the vertices, image data of the iso-valued surface.

8. Image generator as claimed in claim 7 wherein the means for generating, from the list and the normal vectors associated with the vertices, the image data of the iso-valued surface comprises:
means for determing whether a candidate tetrahedron contains points lying on the iso-valued surface;
means for generating, in response to determination that the candidate tetrahedron does contain points lying on the iso-valued surface, the position data of a point p, within the tetrahedron lying on the iso-valued surface;
means for determining the normal vector of the iso-valued surface at the point p by interpolating the normal vectors of the iso-valued surface at the vertices of the tetrahedron;
means for generating image data from the position data of the point p and the normal vector of the iso-valued surface at the point p.

9. Image generator as claimed in Claim 8 wherein the means for determing whether a candidate tetrahedron contains points lying on the iso-valued surface comprises;
means for selecting a candidate tetrahedral element; through which a viewing ray, starting from a predetermined viewing point, passes;
means for generating position data of two intersection points of the viewing ray and the boundary of the candidate tetrahedral element;
means for determining the respective two scalar values corresponding to the positions of the two intersection points from the position data and the scalar values corresponding to the vertices of the candidate tetrahedral element and the position data of the two intersection points;
means for determining whether the specified scalar value lies in the range defined by the respective two scalar values;
wherein the means for generating the position data of the point p is responsive to determination that the specified scalar value lies in the range defined by the respective two scalar values, the point p lies on a line joining the two intersection points,

10. Image generator as claimed in any of Claims 7 to 9 comprising a display means for displaying the generated image.

11. Data processing system comprising an image generator as claimed in any of Claims 7 to 10.

## Patentansprüche

1. Ein Verfahren zum Erzeugen eines Bilds einer isovalenten Oberfläche in einem 3-D-Raum aus Positionsdaten und Skalarwerten, die einer Vielzahl von Punkten entsprechen, die in dem 3-D-Raum verteilt und in einem Speichermittel eines Rechnersystems gespeichert sind, wobei die Bilderzeugung in Reaktion auf die Angabe eines beliebigen Skalarwertes erfolgt, die isovalente Oberfläche eine Gruppe von Punkten ist, der der beliebige angegebene Skalarwert entspricht, wobei das Verfahren folgende Schritte umfaßt:
(a) Unterteilen des 3-D-Raums in Tetraeder-Elemente durch Erzeugen einer Liste, durch welche jedes dieser Tetraeder-Elemente mit seinen Scheitelpunkten in Bezug gebracht wird, und Speichern der Liste in dem Speichermittel, wobei die Scheitelpunkte der Tetraeder-Elemente aus der Vielzahl von Punkten stammen;
(b) durch Bezugnahme auf die Liste, Erzeugen eines Vektors für jedes Tetraeder-Element, entsprechend den Positionsdaten und den Skalarwerten, die den Scheitelpunkten des Tetraeder-Elements entsprechen, wobei der Vektor die Normalvektoren von isovalenten in den Tetraeder-Elementen enthaltenen Oberflächen darstellt;
(c) für jeden Scheitelpunkt jedes Tetraeder-Elements, Erzeugen eines dem Scheitelpunkt zugeordneten Normalvektors aus den Vektoren, die den Tetraeder-Elementen zugeordnet sind, welche den Scheitelpunkt enthalten, und Speichern der Daten in dem Speichermittel;
(d) aus der Liste und den Normalvektor-Daten, die den Scheitelpunkten zugeordnet sind, Erzeugen von Bilddaten der isovalenten Oberfläche mit dem angegebenen Skalarwert.

2. Verfahren nach Anspruch 1, bei dem der Schritt (d), in dem die Bilddaten erzeugt werden, folgende Schritte umfaßt:
(d(i)) Feststellen, ob ein bestimmtes Tetraeder Punkte enthält, die auf der isovalenten Oberfläche liegen;
(d(ii)) wenn festgestellt wird, daß das betreffende Tetraeder Punkte enthält, die auf der isovalenten Oberfläche liegen, Erzeugen der Positionsdaten eines Punktes p innerhalb des Tetraeders, der auf der isovalenten Oberfläche liegt;
(d(iii)) Bestimmen des Normalvektors der isovalenten Oberfläche am Punkt p durch Interpolation der Normalvektoren für die Scheitelpunkte des betreffenden Tetraeders;
(d(iv)) Erzeugen von Bilddaten aus den Positionsdaten des Punktes p und des Normalvektors der isovalenten Oberfläche am Punkt p.

3. Verfahren nach Anspruch 2, bei dem der Schritt (d(i)) folgende Schritte umfaßt:
für jeden einer Vielzahl von Betrachtungsstrahlen, die von einem vorbestimmten Betrachtungspunkt ausgehen,
Auswählen eines bestimmten Tetraeder-Elements, durch welches der Betrachtungsstrahl hindurchgeht;
Erzeugen von Positionsdaten aus zwei Schnittpunkten des Betrachtungsstrahls und der Grenze des betreffenden Tetraeder-Elements;
Bestimmen der jeweiligen zwei Skalarwerte, die den Positionen der zwei Schnittpunkte entsprechen, gemäß den Positionsdaten und den Skalarwerten, die den Scheitelpunkten des betreffenden Tetraeder-Elements und den Positionsdaten der beiden Schnittpunkte entsprechen;
Feststellen, ob der angegebene Skalarwert in dem von den betreffenden zwei Skalarwerten definierten Bereich liegt;
und bei dem, wenn festgestellt wird, daß der angegebene Skalarwert in dem von den betreffenden beiden Skalarwerten definierten Bereich liegt, der Schritt d(ii) folgendes umfaßt:
Erzeugen der Positionsdaten eines Punktes p in dem betreffenden Tetraeder, der auf einer Linie liegt, welche die beiden Schnittpunkte miteinander verbindet, und der dem angegebenen Skalarwert entspricht.

4. Verfahren nach einem der Ansprüche 1 bis 3, bei dem die Vielzahl von Punkten Knotenpunkte für eine dreidimensionale finite Elementmethode sind.

5. Verfahren nach Anspruch 4, vor dem Schritt (a) den Schritt des Hinzufügens neuer Knotenpunkte und des Erzeugens von diesen entsprechenden Positionsdaten und Skalarwerten umfassend.

6. Verfahren nach einem der vorangehenden Ansprüche, den Schritt des Anzeigens des erzeugten Bilds auf einer Anzeigeeinheit umfassend.

7. Bilderzeuger, der in einem 3-D-Raum aus Positionsdaten und Skalarwerten, die einer Vielzahl von in dem 3-D-Raum verteilten Punkten entsprechen, in Antwort auf einen angegebenen beliebigen Skalarwert ein Bild einer isovalenten Oberfläche erzeugt, auf der allen Punkten der beliebige Skalarwert zugeordnet wurde, wobei der Bilderzeuger folgendes umfaßt:
Mittel zum Unterteilen des 3-D-Raums in Tetraeder-Elemente durch Erzeugen einer Liste, die jedes Tetraeder-Element mit seinen Scheitelpunkten in Bezug bringt, wobei die Scheitelpunkte der Tetraeder-Elemente aus der Vielzahl von Punkten stammen,
Mittel, um auf die Liste Bezug zu nehmen, um einen Vektor für jedes Tetraeder-Element aus den Positionsdaten und den Skalarwerten, die den Scheitelpunkten des Tetraeder-Elements entsprechen, zu erzeugen, wobei der Vektor die Normalvektoren der isovalenten Oberflächen darstellt, die in dem Tetraeder-Element enthalten sind;
Mittel, um für jeden Scheitelpunkt jedes Tetraeder-Elements Daten eines diesen zugeordneten Normalvektors aus den Vektoren zu erzeugen, die den Tetraeder-Elementen zugeordnet sind, die den Scheitelpunkt umfassen;
Speichermittel zum Speichern der Positionsdaten und der Skalarwerte, die der Vielzahl von Punkten entsprechen, wobei die Liste die Tetraeder-Elemente mit den Scheitelpunkten dieser Punkte in Bezug bringt, wobei die Vektoren den Tetraeder-Elementen und den den Scheitelpunkten entsprechen Normalvektoren entsprechen;
Mittel, um aus der Liste und den den Scheitelpunkten zugeordneten Normalvektoren Bilddaten der isovalenten Oberfläche zu erzeugen.

8. Bilderzeuger nach Anspruch 7, bei dem das Mittel zur Erzeugung der Bilddaten der isovalenten Oberfläche aus der Liste und den den Scheitelpunkten zugeordneten Normalvektoren folgendes umfaßt:
Mittel, um festzustellen, ob ein bestimmtes Tetraeder Punkte enthält, die auf der isovalenten Oberfläche liegen;
Mittel, um in Reaktion auf die Feststellung, daß das betreffende Tetraeder Punkte enthält, die auf der isovalenten Oberfläche liegen, die Positionsdaten eines Punktes p innerhalb des Tetraeders zu erzeugen, der auf der isovalenten Oberfläche liegt;
Mittel, um durch Interpolation der Normalvektoren der isovalenten Oberfläche an den Scheitelpunkten des Tetraeders den Normalvektor der isovalenten Oberfläche am Punkt p zu bestimmen;
Mittel zur Erzeugung von Bilddaten aus den Positionsdaten des Punktes p und dem Normalvektor der isovalenten Oberfläche am Punkt p.

9. Bilderzeuger nach Anspruch 8, bei dem das Mittel, mit dem festgestellt wird, ob ein bestimmtes Tetraeder Punkte enthält, die auf der isovalenten Oberfläche liegen, folgendes umfaßt:
Mittel zum Auswählen eines bestimmten Tetraeder-Elements, durch welches ein von einem vorbestimmten Betrachtungspunkt ausgehender Betrachtungsstrahl hindurchgeht;
Mittel zum Erzeugen von Positionsdaten von zwei Schnittpunkten des Betrachtungsstrahls und der Grenze des betreffenden Tetraeder-Elements;
Mittel, um die jeweiligen zwei Skalarwerte, die den Positionen der beiden Schnittpunkte entsprechen, aus den Positionsdaten und den Skalarwerten zu erzeugen, die den Scheitelpunkten des betreffenden Tetraeder-Elements und den Positionsdaten der beiden Schnittpunkte entsprechen;
Mittel, um festzustellen, ob der angegebene Skalarwert in dem durch die betreffenden beiden Skalarwerte definierten Bereich liegt;
bei dem das Mittel zum Erzeugen der Positionsdaten des Punktes p auf die Feststellung reagiert, daß der angegebene Skalarwert in dem durch die betreffenden beiden Skalarwerte definierten Bereich liegt, und der Punkt p auf einer Linie liegt, welche die beiden Schnittpunkte miteinander verbindet.

10. Bilderzeuger nach einem der Ansprüche 7 bis 9, ein Anzeigemittel zum Anzeigen der erzeugten Bilddaten umfassend.

11. Datenverarbeitungssystem, das einen Bilderzeuger nach einem der Ansprüche 7 bis 10 umfaßt.

## Revendications

1. Méthode de génération d'une image d'une surface isovalente dans un espace à trois dimensions (3D) à partir de données de position et de valeurs scalaires correspondant à une pluralité de points répartis dans un espace 3D et emmagasinés dans un moyen d'emmagasinage d'un système informatique, la génération d'image étant en réponse à une valeur scalaire arbitraire alors spécifiée, la surface isovalente étant un ensemble de points auxquels correspond la valeur scalaire arbitraire spécifiée, la méthode comprenant les étapes de:
(a) diviser l'espace 3D en éléments tétraédriques en engendrant une liste associant chaque élément tétraédrique à ses sommets et en emmagasinant la liste dans le moyen d'emmagasinage, les sommets des éléments tétraédriques étant parmi ceux de la pluralités de points;
(b) engendrer, en référence à la liste, un vecteur pour chaque élément tétraédrique, conformément aux données de position et aux valeurs scalaires correspondant aux sommets de l'élément tétraédrique, le vecteur représentant les vecteurs normaux de surfaces isovalentes contenues dans l'élément tétraédrique;
(c) engendrer, pour chaque sommet de chaque élément tétraédrique, un vecteur normal associé au sommet, à partir des vecteur associés aux éléments tétraédriques qui forment le sommet, et emmagasiner les données dans le moyen d'emmagasinage;
(d) engendrer, à partir de la liste et des données de vecteur normal associées aux sommets, des données d'image de la surface isovalente ayant la valeur scalaire spécifiée.

2. Méthode selon la revendication 1, dans laquelle l'étape (d) pour engendrer des données d'image comprend les étapes de:
(d(i)) déterminer si un tétraèdre candidat contient des points se trouvant sur la surface isovalente;
(d(ii)) après détermination que le tétraèdre candidat contient des points se trouvant sur la surface isovalente, engendrer les données de position d'un point p, dans le tétraèdre, se trouvant sur la surface isovalente;
(d(iii)) déterminer le vecteur normal de la surface isovalente au point p en interpolant les vecteurs normaux des sommets du tétraèdre candidat;
(d(iv)) engendrer des données d'image provenant des données de position du point p et du vecteur normal de la surface isovalente au point p.

3. Méthode selon la revendication 2, dans laquelle l'étape (d(i)) comprend les étapes de:
sélectionner, pour chacun d'une pluralité de rayons de visualisation commençant à partir d'un point d'observation prédéterminé, un élément tétraédrique candidat dans lequel passe le rayon de visualisation;
engendrer des données de position de deux intersections du rayon de visualisation et de la limite de l'élément tétraédrique candidat;
déterminer les deux valeurs scalaires respectives correspondant aux positions des deux intersections conformément aux données de position et valeurs scalaires correspondant aux sommets de l'élément tétraédrique candidat et aux données de position des deux intersections;
déterminer si la valeur scalaire se trouve dans la plage définie par les deux valeurs scalaires respectives;
et dans laquelle, après détermination que la valeur scalaire spécifiée est dans la plage définie par les deux valeurs scalaires respectives, l'étape d(ii) comprend
engendrer les données de position d'un point p dans le tétraèdre candidat se trouvant sur une ligne reliant les deux intersections et correspondant à la valeur scalaire spécifiée.

4. Méthode selon l'une quelconque des revendications 1 à 3, dans laquelle la pluralité de points sont des points nodaux pour une méthode d'élément fini 3D.

5. Méthode selon la revendication 4, comprenant l'étape, avant l'étape (a), d'additionner de nouveaux points nodaux et d'engendrer des données de position et des valeurs scalaires qui leur correspondent.

6. Méthode selon l'une quelconque des revendications précédentes, comprenant l'étape d'afficher l'image engendrée sur un dispositif d'affichage.

7. Générateur d'image pour engendrer, en réponse à une valeur scalaire arbitraire alors spécifiée, une image d'une surface isovalente, tous les points de laquelle ayant la valeur scalaire arbitraire qui leur est associée, dans un espace 3D à partir de données de position et de valeurs scalaires correspondant à une pluralité de points répartis dans un espace 3D, le générateur d'image comprenant:
des moyens de division de l'espace 3D en éléments tétraédriques en engendrant une liste associant chaque élément tétraédrique à ses sommets, les sommets des éléments tétraédriques étant parmi ceux de la pluralité de points;
des moyens de référence à la liste pour engendrer un vecteur pour chaque élément tétraédrique à partir des données de position et des valeurs scalaires correspondant aux sommets de l'élément tétraédrique, le vecteur représentant les vecteurs normaux de surfaces isovalentes contenues dans l'élément tétraédrique;
des moyens de génération, pour chaque sommet de chaque élément tétraédrique, de données d'un vecteur normal qui lui est associé à partir des vecteurs associés aux éléments tétraédriques qui forment le sommet;
des moyens d'emmagasinage pour emmagasiner les données de position et valeurs scalaires correspondant à la pluralité de points, la liste associant les éléments tétraédriques à leurs sommets, les vecteurs correspondant aux éléments tétraédriques et vecteurs normaux correspondant aux sommets;
des moyens de génération, à partir de la liste et des vecteurs normaux associés aux sommets, des données d'image de la surface isovalente.

8. Générateur d'image selon la revendication 7, dans lequel les moyens de génération, à partir de la liste et des vecteurs normaux associés aux sommets, des données d'image de la surface isovalente, comprennent:
des moyens pour déterminer si un tétraèdre candidat contient des points se trouvant sur la surface isovalente;
des moyens pour engendrer, en réponse à la détermination que le tétraèdre candidat contient des points se trouvant sur la surface isovalente, les données de position d'un point p, dans le tétraèdre se trouvant sur la surface isovalente;
des moyens pour déterminer le vecteur normal de la surface isovalente au point p par interpolation des vecteurs normaux de la surface isovalente aux sommets du tétraèdre;
des moyens pour engendrer des données d'image à partir des données de position du point p et du vecteur normal de la surface isovalente au point p.

9. Générateur d'image selon la revendication 8, dans lequel les moyens pour déterminer si un tétraèdre candidat contient des points se trouvant sur la surface isovalente, comprennent:
des moyens pour sélectionner un élément tétraédrique candidat par lequel passe un rayon de visualisation commençant à un point d'observation prédéterminé;
des moyens pour engendrer des données de position de deux points d'intersection du rayon de visualisation et de la limite de l'élément tétraédrique candidat;
des moyens pour déterminer les deux valeurs scalaires respectives correspondant aux positions des deux points d'intersection conformément aux données de position et valeurs scalaires correspondant aux sommets de l'élément tétraédrique candidat et aux données de position des deux points d'intersection;
des moyens pour déterminer si la valeur scalaire spécifiée se trouve dans la plage définie par les deux valeurs scalaires respectives;
dans lequel les moyens pour engendrer les données de position du point p sont sensibles à la détermination que la valeur scalaire spécifiée se trouve dans la plage définie par les deux valeurs scalaires respectives et que le point p se trouve sur une ligne reliant les deux points d'intersection.

10. Générateur d'image selon l'une quelconque des revendications 7 à 9, comprenant un moyen d'affichage pour afficher l'image engendrée.

11. Système de traitement de données comprenant un générateur d'image selon l'une quelconque des revendications 7 à 10.
